(19) **Europäisches Patentamt / European Patent Office / Office européen des brevets**

(11) **EP 2 446 579 B1**

(12) # FASCICULE DE BREVET EUROPEEN

(45) Date de publication et mention de la délivrance du brevet:
**09.12.2020 Bulletin 2020/50**

(21) Numéro de dépôt: **10745322.7**

(22) Date de dépôt: **25.06.2010**

(51) Int Cl.:
*H04L 9/30* $^{(2006.01)}$     *H04L 9/32* $^{(2006.01)}$

(86) Numéro de dépôt international:
**PCT/FR2010/051301**

(87) Numéro de publication internationale:
**WO 2010/149937 (29.12.2010 Gazette 2010/52)**

(54) **PROCÉDÉ D'AUTHENTIFICATION MUTUELLE D'UN LECTEUR ET D'UNE ÉTIQUETTE RADIO**

VERFAHREN ZUR GEGENSEITIGEN AUTHENTIFIZIERUNG EINES LESEGERÄTS UND EINES FUNKETIKETTS

PROCESS FOR MUTUALLY AUTHENTICATING A READER AND A RADIO TAG

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **26.06.2009 FR 0954367**

(43) Date de publication de la demande:
**02.05.2012 Bulletin 2012/18**

(73) Titulaire: **ORANGE**
**75015 Paris (FR)**

(72) Inventeurs:
- **ROBSHAW, Matthew**
  **F-95220 Herblay (FR)**
- **GILBERT, Henri**
  **F-91440 Bures sur Yvette (FR)**

(56) Documents cités:
**EP-A1- 2 063 375**

- **Divyan M. Konidala, Zeen Kim, Kwangjo Kim: "A Simple and Cost-effective RFID Tag-Reader Mutual Authentication Scheme", , juillet 2007 (2007-07), XP007912467, Proceedings of Int'l Conference on RFID Security (RFIDSec)'07 Extrait de l'Internet: URL:http://rfidsec07.etsit.uma.es/slides/p apers/paper-43.pdf [extrait le 2010-03-30]**

- **Axel Poschmann: "Lightweight Cryptography - Cryptographic Engineering for a Pervasive World", , 30 avril 2009 (2009-04-30), XP007912470, Ruhr university Bochum Extrait de l'Internet: URL:http://eprint.iacr.org/2009/516.pdf [extrait le 2010-03-26]**

- **MCLOONE M ET AL: "Public Key Cryptography and RFID Tags", 1 janvier 2007 (2007-01-01), TOPICS IN CRYPTOLOGY - CT-RSA 2007 LECTURE NOTES IN COMPUTER SCIENCE;;LNCS, SPRINGER, BERLIN, DE, PAGE(S) 372 - 384, XP019053637, ISBN: 9783540693277 alinéa [0002]**

- **Markus Jakobsson ET AL: "Mutual Authentication for Low-Power Mobile Devices", LNCS, vol. 2339, 1 January 2001 (2001-01-01), pages 178-195, XP055545185,**

- **JULIEN BRINGER ET AL: "Identification and Privacy: Zero-Knowledge is not Enough", INTERNATIONAL ASSOCIATION FOR CRYPTOLOGIC RESEARCH,, vol. 20080526:025409, 20 May 2008 (2008-05-20), pages 1-46, XP061002847, [retrieved on 2008-05-20]**

**Description**

L'invention concerne une technique d'authentification mutuelle d'un lecteur et d'une étiquette radio.

L'invention trouve une application particulièrement intéressante dans le domaine de la radio-identification, de l'anglais "Radio Frequency Identification", ou "RFID".

La radio-identification est une technique pour stocker et récupérer des données à distance en utilisant des marqueurs appelés radio-étiquettes, ou étiquettes radio (on parle également de "tag RFID"). Une étiquette radio est un petit objet, tel qu'une étiquette auto-adhésive, qui peut être collée sur, ou incorporée dans des objets ou produits. Elle comprend une antenne associée à une puce électronique qui lui permet de recevoir et de répondre à des requêtes radio émises depuis un émetteur-récepteur appelé lecteur. On utilise par exemple les étiquettes radio pour identifier des personnes lorsque les étiquettes sont intégrées dans des passeports, dans des titres de transport ou dans des cartes de paiement, ou pour identifier des produits comme avec un code barre.

De manière classique, lorsqu'une étiquette passe à portée d'un lecteur radio, le lecteur interagit avec l'étiquette et interroge celle-ci. Lors d'une telle interrogation, le lecteur peut récupérer des informations propres à l'étiquette, comme un identifiant d'étiquette, ou classiquement des données qui participent à l'authentification de l'étiquette auprès d'un lecteur. Cette faculté pour un lecteur de récupérer des informations d'une étiquette de façon spontanée n'est pas sans inconvénients en termes de sécurité. En effet, il peut arriver que le lecteur soit corrompu et sous le contrôle d'une personne mal intentionnée, et dans certains cas la récupération spontanée d'informations d'une étiquette contribue à épuiser des ressources d'authentification propres à l'étiquette. Cela peut contribuer à perpétrer une attaque par déni de service à l'encontre de l'étiquette. Il serait donc intéressant qu'une étiquette puisse distinguer d'une manière ou d'une autre un lecteur authentique, ou légitime, d'un lecteur corrompu. Pour distinguer un lecteur légitime d'un lecteur corrompu, il devient alors nécessaire pour une étiquette d'authentifier le lecteur avant de s'authentifier auprès de ce lecteur.

Plusieurs schémas d'authentification d'une étiquette auprès d'un lecteur radio existent. Par exemple, on connaît le schéma d'authentification "GPS" (ou "cryptoGPS"), du nom des inventeurs "Girault, Paillès, Poupard, et Stem" [M. Girault, G. Poupard and J. Stem. "On the Fly Authentication and Signature Schemes Based on Groups of Unknown Order. Journal of Cryptology, pages 463-488, volume 19, number 4, 2006]. Le schéma GPS est un schéma d'authentification à clé publique basé sur le problème du logarithme discret dans un groupe multiplicatif. GPS est classiquement utilisé pour qu'un dispositif, habituellement un dispositif qui a très peu de puissance de calcul, tel qu'une étiquette radio, s'authentifie auprès d'un second dispositif, typiquement un dispositif plus puissant, tel qu'un lecteur radio. Le schéma est tel que le coût de calcul de l'authentification par le dispositif le moins puissant peut être réduit considérablement grâce à un certain nombre d'optimisations, notamment l'utilisation de "coupons". Avec GPS, les calculs les plus coûteux sont effectués par le dispositif le plus puissant. Cette caractéristique rend le protocole GPS très adapté pour l'authentification d'étiquettes radio auprès de lecteurs radio. Cependant, on ne peut pas facilement transposer ce schéma de manière à ce qu'une étiquette authentifie un lecteur. En effet, une simple transposition de ce schéma à l'authentification du lecteur par l'étiquette induit des calculs coûteux au niveau de l'étiquette radio qui reste un dispositif très limité en termes de puissance de calcul.

Le document « Identification and Privacy : Zero-Knowledge is not Enough », Julien Bringer et Al., International Association for Cryptologic Research, 20 mai 2008, propose une adaptation du protocole zero-knowledge GPS avec coupons afin de garantir la propriété de privacy (protection de la vie privée). Cependant, cette adaptation reste sensible à des attaques par déni de service qui provoquent un épuisement des coupons d'authentification au niveau de l'étiquette.

L'invention vient remédier aux inconvénients mentionnés ci-dessus en proposant un procédé d'authentification mutuelle d'un lecteur et d'une étiquette radio selon la revendication 1.

Le procédé d'authentification selon l'invention permet une authentification du lecteur par l'étiquette. Le succès de cette authentification conditionne en outre l'authentification, plus classique, de l'étiquette par le lecteur.

On note que la littérature propose plusieurs procédés d'authentification d'étiquettes RFID auprès d'un lecteur radio. Par exemple, un procédé connu est fondé sur l'algorithme de chiffrement asymétrique GPS basé sur des coupons pré-calculés et stockés sur l'étiquette. Cela constitue une optimisation du schéma GPS bien adapté au cas des étiquettes radio. Un coupon d'authentification de l'étiquette est alors consommé par l'étiquette au cours d'une authentification courante auprès du lecteur. L'authentification se fait alors sur la base de question/réponse en utilisant ce coupon. Au vu d'un tel procédé, on serait tenté d'utiliser le même schéma pour l'authentification du lecteur radio par l'étiquette, par exemple, en inversant les opérations faites par les deux dispositifs. Cependant, on note que les ressources allouées à une étiquette sont extrêmement limitées, en termes de mémoire et de puissance de calcul, et qu'une simple transposition des opérations du lecteur à l'étiquette n'est pas satisfaisante.

Le procédé d'authentification mutuelle selon l'invention est basé pour l'authentification du lecteur par l'étiquette sur la cryptographie à clé secrète et est de ce fait parfaitement viable. Il est utilisé en conjonction avec un schéma d'authentification connu pour l'authentification de l'étiquette par le lecteur, par exemple le schéma GPS qui est un crypto-système à clé publique bien adapté pour l'authentification d'une étiquette auprès d'un lecteur. Cela peut être fait sans coût d'implémentation notable pour l'étiquette.

Ainsi, le procédé selon l'invention offre à une étiquette un moyen d'authentifier en premier lieu un lecteur avant que l'étiquette ne s'authentifie elle-même auprès du lecteur.

Lorsqu'illustré dans le cas particulier d'une authentification d'une étiquette auprès d'un lecteur selon le schéma GPS avec pré-calcul de coupons $x_i$ d'authentification d'étiquette, on remarque que l'authentification préalable du lecteur par l'étiquette permet d'éviter des attaques par déni de service qui seraient perpétrées contre des étiquettes par des lecteurs corrompus. En effet, avec le procédé selon l'invention, le coupon $x_i$ d'authentification d'étiquette utilisé au cours d'une authentification courante n'est pas consommé si le lecteur avec lequel l'étiquette dialogue est un lecteur corrompu. En effet, dans ce cas le lecteur n'est pas apte à envoyer à l'étiquette le coupon ti d'authentification du lecteur et dans ce cas, l'étiquette n'envoie par la réponse y permettant de finaliser l'authentification de l'étiquette.

Avantageusement, le procédé selon l'invention comprend, lors de l'étape d'obtention par le lecteur du coupon d'authentification du lecteur, une étape d'extraction d'une mémoire par le lecteur dudit coupon pré-calculé et associé dans la mémoire à l'index déterminé.

De façon avantageuse, la valeur d'authentification est calculée par l'étiquette au moment de l'authentification.

Avantageusement, dans ce mode de réalisation, le coupon d'authentification de l'étiquette est calculé au cours d'une phase de configuration à partir d'un aléa obtenu en appliquant à l'index une première fonction pseudo-aléatoire paramétrée par une première clé secrète de régénération, ladite fonction pseudo-aléatoire et ladite clé de régénération étant installées dans l'étiquette.

Avec ce mode de réalisation conforme au schéma GPS selon un "mode coupons réduits", la fonction pseudo-aléatoire PRF et la clé de régénération k installées sur l'étiquette permettent à l'étiquette de régénérer les aléas $r_i$ associés respectivement aux coupons $x_i$ stockés dans l'étiquette.

Dans un mode de réalisation de l'invention, l'étape d'authentification de l'étiquette par le lecteur comprend lors de l'étape d'envoi du coupon par le lecteur, l'envoi également d'un défi.

Avantageusement, le coupon constitue une partie du défi.

Dans ce mode de réalisation, le coupon est envoyé comme une partie du défi c. Ainsi, ce mode permet d'envoyer un message de taille plus petite qu'un message qui comprendrait l'envoi du coupon $t_i$ et du défi c.

La valeur d'authentification calculée par l'étiquette repose sur une fonction pseudo-aléatoire qui nécessite peu de puissance de calcul de la part de l'étiquette. C'est un avantage indéniable pour un dispositif dont les ressources sont limitées de ne pas avoir à stocker préalablement à une authentification un ensemble de valeurs d'authentification, et de calculer ces valeurs avec des moyens embarqués, en l'espèce une fonction pseudo-aléatoire implantée sur l'étiquette. En outre, dans le cas particulier où l'authentification de l'étiquette repose sur le schéma GPS en mode "coupons réduits", cette fonction pseudo-aléatoire peut être choisie de telle manière que les ressources de calcul qu'elle nécessite soient pour l'essentiel les mêmes que celles requises par la fonction pseudo-aléatoire utilisée pour la régénération des aléas associés aux coupons.

L'invention concerne aussi un système d'authentification selon la revendication 7..

De nombreux détails et avantages de l'invention seront mieux compris à la lecture de la description d'un mode particulier de réalisation en référence aux dessins annexés donnés à titre non limitatif, et dans lesquels :

- la figure 1 représente les étapes d'un schéma d'authentification connu d'une étiquette auprès d'un lecteur, en l'espèce le schéma GPS, selon un état antérieur de la technique ;
- la figure 2 représente les étapes du procédé d'authentification mutuelle d'une étiquette et d'un lecteur radio, selon un mode particulier de réalisation de l'invention ;
- la figure 3 représente un exemple de réalisation d'une étiquette agencée pour authentifier un lecteur radio représenté sur la figure 4 ;
- la figure 4 représente un exemple de réalisation d'un lecteur radio agencé pour s'authentifier auprès d'une étiquette radio représentée sur la figure 3.

Le procédé d'authentification mutuelle d'un lecteur auprès d'une étiquette selon l'invention peut être utilisé en conjonction avec une variété de schémas d'authentification d'une étiquette auprès d'un lecteur. De tels schémas peuvent être basés sur de la cryptographie à clé publique ou de la cryptographie à clé secrète. Cependant, un schéma connu d'identification d'une étiquette auprès

- des moyens de réception, agencés pour recevoir de l'étiquette une donnée permettant de déterminer un index d'identification d'un coupon d'authentification du lecteur, choisi par l'étiquette,
- des moyens d'obtention, agencés pour obtenir le coupon à partir de l'index déterminé,
- des moyens d'envoi, agencés pour envoyés le coupon à l'étiquette,
- des moyens d'authentification, agencés pour authentifier l'étiquette.

L'invention porte également sur un système d'authentification radio comprenant :

- un lecteur radio selon l'invention, et
- au moins une étiquette radio selon l'invention.

L'invention concerne aussi un programme d'ordinateur destiné à être installé dans une mémoire d'un lecteur radio, comprenant des instructions pour la mise en œuvre des étapes du procédé d'authentification mutuelle d'une étiquette radio et d'un lecteur selon l'invention qui sont exécutées par le lecteur, lorsque le programme est exécuté par un processeur.

L'invention concerne également un support de données sur lequel est enregistré le programme d'ordinateur selon l'invention.

De nombreux détails et avantages de l'invention seront mieux compris à la lecture de la description d'un mode particulier de réalisation en référence aux dessins annexés donnés à titre non limitatif, et dans lesquels :

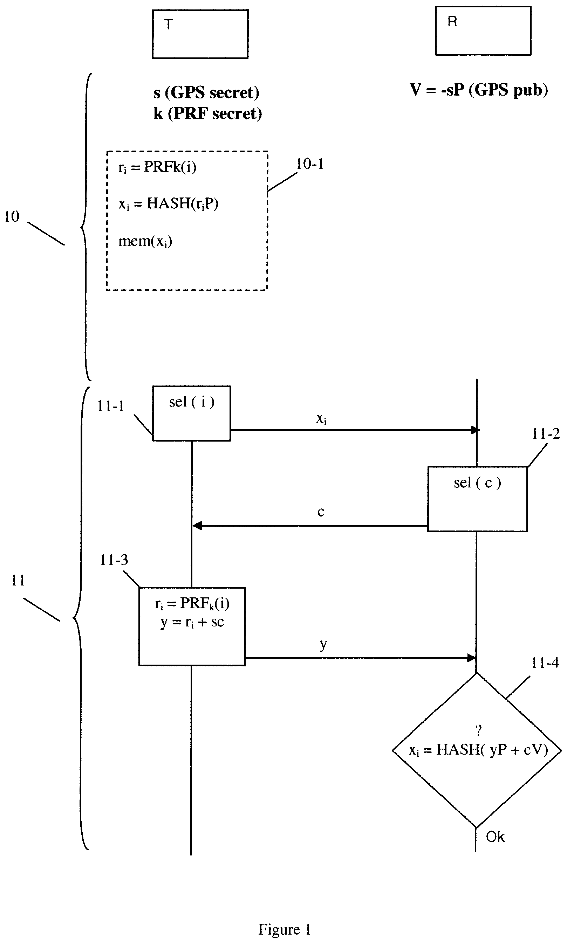

- la figure 1 représente les étapes d'un schéma d'authentification connu d'une étiquette auprès d'un lecteur, en l'espèce le schéma GPS, selon un état antérieur de la technique ;

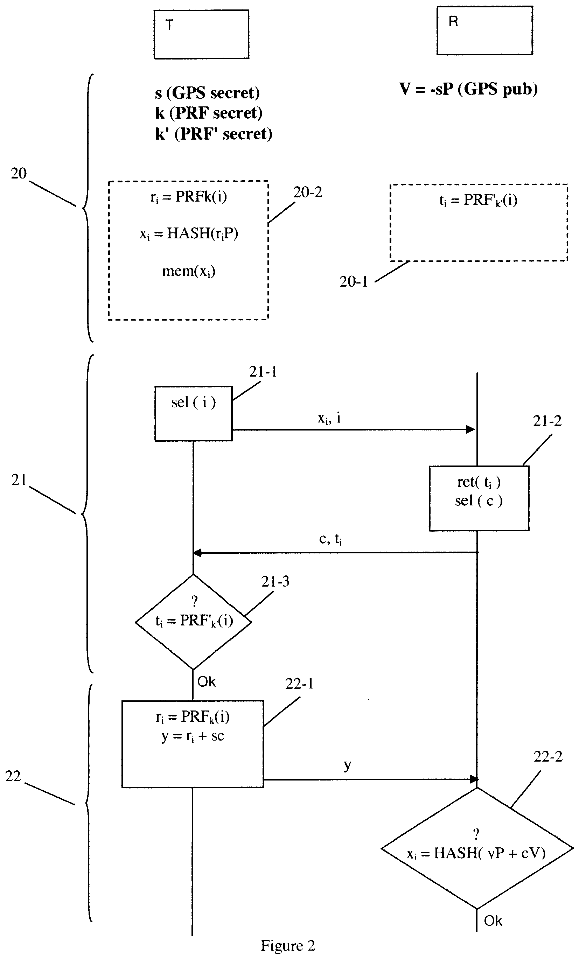

- la figure 2 représente les étapes du procédé d'authentification mutuelle d'une étiquette et d'un lecteur radio, selon un mode particulier de réalisation de l'invention ;

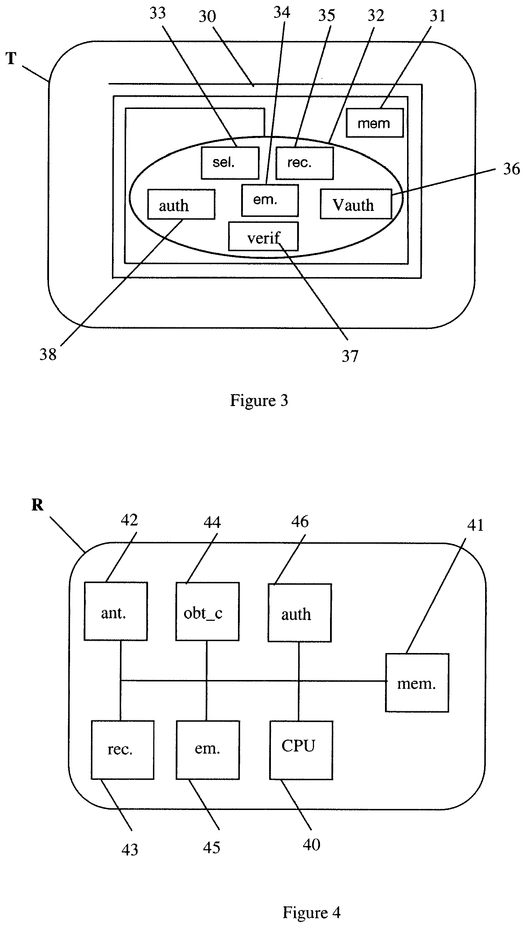

- la figure 3 représente un exemple de réalisation d'une étiquette agencée pour authentifier un lecteur radio représenté sur la figure 4 ;
- la figure 4 représente un exemple de réalisation d'un lecteur radio agencé pour s'authentifier auprès d'une étiquette radio représentée sur la figure 3.

Le procédé d'authentification mutuelle d'un lecteur auprès d'une étiquette selon l'invention peut être utilisé en conjonction avec une variété de schémas d'authentification d'une étiquette auprès d'un lecteur. De tels schémas peuvent être basés sur de la cryptographie à clé publique ou de la cryptographie à clé secrète. Cependant, un schéma connu d'identification d'une étiquette auprès d'un lecteur, appelé "GPS", abréviation de "Girault, Paillès, Poupard et Stem", noms des inventeurs, est particulièrement bien adapté pour être utilisé en relation avec le procédé selon l'invention. Le schéma GPS est une technique d'authentification à clé publique. C'est un protocole de type "zero-knowledge" (ou "à divulgation nulle de connaissance") dont la sécurité repose sur la difficulté du logarithme discret dans un groupe. La mise en œuvre de ce schéma peut reposer par exemple sur de la cryptographie à base de courbe elliptique.

Ce schéma est habituellement utilisé pour qu'un dispositif très peu puissant, en termes de mémoire ou/et de puissance de calcul, s'authentifie auprès d'un deuxième dispositif, plus puissant. Le protocole est tel que le coût de l'authentification pour le dispositif le moins puissant peut être énormément réduit au moyen d'une série d'optimisations. Par exemple, une optimisation du schéma GPS repose sur un mode dit "à coupons". Ce mode consiste à calculer antérieurement à une session d'authentification tout ce qui peut l'être, laissant un minimum d'opérations à effectuer pendant la session d'authentification proprement dite. Cela rend le protocole GPS très bien adapté pour les applications basées sur les étiquettes RFID.

Ainsi, dans un premier temps, il est décrit en relation avec la figure 1, un exemple de mise en œuvre d'un schéma d'authentification GPS d'une étiquette radio auprès d'un lecteur, selon un état antérieur de la technique. L'exemple de mise en œuvre de GPS décrit ici est basé sur les courbes elliptiques ; il utilise un sous-groupe de points générés par un point P sur une courbe E. La mise en œuvre décrite ici utilise des coupons d'authentification d'étiquette et une régénération d'aléas associés à chacun de ces coupons par l'étiquette, qui constituent une optimisation dans un schéma GPS de base. Dans cet exemple de réalisation, les calculs arithmétiques sur les courbes elliptiques sont exécutés sur le lecteur, alors que seulement des opérations arithmétiques de base sont exécutées par l'étiquette. On comprend que cet exemple est très intéressant en termes de performance et d'espace d'implémentation pour l'étiquette.

Selon ce schéma, un système d'authentification comprend au moins une étiquette T adaptée pour s'authentifier auprès d'un lecteur R lorsqu'elle passe à proximité du lecteur R.

Le schéma comprend de manière classique deux phases : une phase de configuration 10 au cours de laquelle des données d'authentification sont calculées ou/et fournies à l'étiquette T et au lecteur R, et une phase d'authentification 11 au cours de laquelle l'étiquette T s'authentifie auprès du lecteur R. La phase de configuration 10 peut n'être exécutée qu'une fois dans la vie du système. La phase d'authentification 11 est exécutée à chaque authentification de l'étiquette auprès du lecteur R.

Au cours de la phase de configuration 10, un couple de clés GPS (s, V) est généré. Le couple comprend une clé secrète s et une clé publique associée V. La clé secrète s, propre à l'étiquette T, est stockée dans l'étiquette T et n'est jamais extraite, ni transmise hors de l'étiquette T. La clé publique V est accessible par le lecteur R. Les clés s et V sont liées selon la formule suivante : $V = -sP$, où P est un point sur la courbe elliptique E connu du lecteur R. Autrement dit, la clé publique V est calculée à partir du produit scalaire entre la clé secrète s et le point P. Dans le mode de réalisation du schéma GPS décrit ici, parfois appelé mode "coupons réduits", une deuxième clé secrète k, appelée clé de régénération, est installée sur l'étiquette T. Elle est utilisée comme paramètre d'une fonction pseudo-aléatoire "PRF" (pour "Pseudo-Random Function") installée sur l'étiquette T.

Au cours de la phase de configuration 10, dans une étape 10-1 de configuration, il est pré-calculé un nombre prédéterminé n de valeurs, appelées habituellement coupons d'authentification de l'étiquette, et notées $x_i$, $1 \le i \le n$. On note $x_i$ le coupon d'indice i. L'indice i est un index d'identification du coupon $x_i$. Pour calculer le coupon $x_i$, il est généré un aléa $r_i$ au moyen de la fonction pseudo-aléatoire PRF paramétrée par la clé de régénération k et appliquée à l'index i ($r_i = PRF_k(i)$). Les aléas $r_i$ (donc, la sortie de la fonction PRF) ont une taille importante, par exemple 1100 bits. Le coupon $x_i$ d'authentification de l'étiquette est alors calculé selon la formule suivante : $x_i = HASH(r_iP)$, où HASH est une fonction de hachage connue appliquée au produit scalaire de l'aléa $r_i$ et du point P. La multiplication scalaire du point P par l'entier $r_i$, et dans une moindre mesure l'évaluation de la fonction de hachage HASH sont des opérations coûteuses en termes de puissance de calcul. Ainsi, habituellement les coupons $x_i$ sont pré-calculés par une entité de calcul (non représentée) du système d'authentification, différente de l'étiquette T et du lecteur R. Les coupons d'authentification de l'étiquette $x_i$ sont ensuite stockés sur l'étiquette T, dans une mémoire non représentée de l'étiquette T, en vue d'être utilisés au cours d'authentifications auprès du lecteur R.

Au cours de la phase 11 d'authentification, dans une étape initiale 11-1 de sélection et d'envoi, il est sélectionné par l'étiquette T un coupon $x_i$ d'index i. En fin d'étape 11-1, le coupon sélectionné $x_i$ est envoyé au lecteur R.

Dans une étape 11-2 de sélection et d'envoi d'un défi, il est généré par le lecteur R un défi c. Le défi c est généré aléatoirement. En fin d'étape 11-2, le défi c est envoyé par le lecteur R à l'étiquette T.

Dans une étape 11-3 de régénération et de calcul, il est régénéré l'aléa $r_i$ par l'étiquette T. A cette fin, la fonction pseudo-aléatoire PRF installée sur l'étiquette T et paramétrée par la clé secrète de régénération k est appliquée à l'index i qui identifie le coupon $x_i$. Il est connu que la fonction pseudo-aléatoire nécessite pour l'étiquette T peu de puissance de calcul. Il est ensuite calculé par l'étiquette T une réponse y au défi c au moyen de la formule suivante : $y = r_i + sc$. La réponse y est la somme de l'aléa $r_i$ et du produit scalaire de la clé secrète s et du défi c. En fin d'étape 11-3, la réponse y est envoyée au lecteur R.

Dans une étape 11-4 de vérification, il est vérifié par le lecteur R que le coupon $x_i$ reçu de l'étiquette en fin d'étape 11-1 est égal à une valeur obtenue en appliquant la fonction de hachage HASH à la somme du produit scalaire de la réponse y et du point P et du produit scalaire du défi c et de la clé publique V : $HASH(yP + cV)$.

Si la vérification est positive (branche Ok sur la figure 1), alors l'étiquette T s'est correctement authentifiée auprès du lecteur R.

La fonction HASH est par exemple la fonction SHA-1 ("Secure Hash Algorithm").

Habituellement, après la phase d'initialisation 10, la clé secrète de régénération k n'est présente que sur l'étiquette, elle ne quitte jamais l'étiquette et n'est pas destinée à être partagée avec une autre entité, hormis éventuellement l'entité de calcul apte à pré-calculer les coupons d'authentification de l'étiquette. La clé secrète de régénération k est différente de la clé secrète s. Cependant, dans un exemple de mise en œuvre du schéma GPS, elle peut être dérivée de la clé secrète s.

Dans un autre exemple de mise en œuvre du schéma GPS (non représenté) qui constitue une autre optimisation du schéma, les coupons d'authentification de l'étiquette $x_i$ sont pré-calculés et stockés sur le lecteur, ou délivrés au lecteur par l'entité de calcul à travers un canal de communication. Dans ce cas, l'étiquette peut ne transmettre au cours de l'étape 11-1 de sélection et d'envoi que l'index i du coupon $x_i$.

Dans une variante de réalisation du schéma GPS non décrite, les coupons d'authentification d'étiquette qui sont stockés sur l'étiquette T sont des couples ($x_i$, $r_i$), ou "coupons non réduits". Dans cette variante, les aléas $r_i$ sont donc stockés dans l'étiquette et ne sont donc pas régénérés lors de l'authentification, comme c'est le cas dans le schéma décrit précédemment. On remarque que cette variante est moins intéressante en termes d'occupation de l'espace mémoire de l'étiquette T, puisqu'elle nécessite que l'étiquette stocke plus d'informations.

Les étapes d'un procédé d'authentification mutuelle d'une étiquette radio T et d'un lecteur radio R selon un mode particulier de réalisation vont maintenant être décrites en relation avec la figure 2. Bien que le procédé d'authentification mutuelle soit illustré ici avec le protocole d'authentification GPS pour l'authentification de l'étiquette T auprès du lecteur R, le procédé ne se limite pas à cet exemple. Ainsi, le procédé selon l'invention peut comprendre une authentification de l'étiquette T par le lecteur R conforme à d'autres modèles d'authentification d'une étiquette par un lecteur. Les protocoles d'authentification d'une étiquette par un lecteur peuvent être des protocoles basés sur de la cryptographie à clé publique ou à clé secrète.

Le procédé selon l'invention comprend une phase de configuration 20 au cours de laquelle des données d'authentification sont calculées ou/et fournies à l'étiquette T et au lecteur R, ainsi qu'une première phase d'authentification 21, et le cas échéant une deuxième phase d'authentification 22 au cours desquelles le lecteur R est authentifié par l'étiquette T, puis l'authentification de l'étiquette T par le lecteur R est finalisée. Bien que les deux phases d'authentification soient entrelacées, c'est-à-dire que des données échangées au cours de la première phase d'authentification 21 sont utilisées pour effectuées la deuxième phase d'authentification 22, on considère, pour simplifier, que la première phase d'authentification 21 est dédiée à l'authentification du lecteur par l'étiquette et que la deuxième phase d'authentification 22 est dédiée à l'authentification de l'étiquette par le lecteur. Ainsi, au cours de la première phase d'authentification 21, le lecteur R est authentifié par l'étiquette T. Si l'authentification du lecteur R par l'étiquette T réussit, alors l'authentification mutuelle se poursuit avec la deuxième phase d'authentification 22 au cours de laquelle il est procédé à la finalisation de l'authentification de l'étiquette T par le lecteur R.

Au cours de la phase d'initialisation 20, un couple de clés GPS (s, V) est généré pour l'étiquette T. Le couple comprend une clé secrète s et une clé publique associée V. La clé secrète s est stockée dans l'étiquette T et n'est jamais transmise hors de l'étiquette T. La clé publique V est accessible au lecteur R. Les clés s et V sont liées selon la formule suivante : $V = -sP$, où P est un point sur la courbe elliptique E. Autrement dit, la clé publique V est obtenue à partir du produit scalaire de la clé secrète s et du point P. Dans le mode de réalisation du schéma GPS décrit ici, parfois appelé mode "coupons réduits", une deuxième clé secrète k, appelée clé de régénération de coupons d'authentification de l'étiquette, ou première clé de régénération, et comparable à la clé secrète k selon la figure 1, est stockée dans l'étiquette T. Elle est utilisée comme paramètre d'une première fonction pseudo-aléatoire "PRF" (pour "Pseudo-Random Function"), installée sur l'étiquette T. La première clé secrète de régénération k est différente de la clé secrète s. Cependant, elle peut être dérivée de la clé secrète s. Une troisième clé secrète k', appelée clé de régénération de coupons d'authentification du lecteur, ou seconde clé de régénération, est stockée dans l'étiquette T. Elle est utilisée comme paramètre d'une seconde fonction pseudo-aléatoire PRF', installée sur l'étiquette T.

En outre, lors de la phase de configuration 20, un nombre prédéterminé m de coupons $t_i$ d'authentification du lecteur, $1 \leq i \leq m$, est calculé et stocké dans une mémoire de coupons, non représentée, accessible par le lecteur R. Les coupons $t_i$ d'authentification du lecteur sont préalablement calculés par une entité de calcul (non représentée) selon la formule suivante : $t_i = PRF'_{k'}(i)$. Autrement dit, chaque coupon $t_i$ correspond à l'élément résultant de l'application de la seconde fonction PRF' à l'index i. Les coupons $t_i$, c'est-à-dire les éléments sortants de la fonction PRF', ont par exemple une taille de 32 bits, ou 64 bits. Les coupons $t_i$ d'authentification du lecteur sont ensuite stockés dans la mémoire de coupons du lecteur R dans une étape 20-1. On note que dans le mode de réalisation particulier décrit en relation avec la figure 2, le lecteur R ne possède pas la seconde clé de régénération k' des coupons d'authentification du lecteur et n'est donc pas adapté pour calculer les coupons $t_i$ d'authentification du lecteur.

Au cours de la phase de configuration 20, dans une étape 20-2 de configuration, comparable à l'étape de configuration 10-1 selon la figure 1, il est pré-calculé un nombre prédéterminé n de coupons d'authentification de l'étiquette $x_i$, $1 \leq i \leq n$. Pour calculer le coupon $x_i$, l'entité de calcul génère un aléa $r_i$ au moyen de la première fonction pseudo-aléatoire PRF paramétrée par la première clé de régénération k et appliquée à l'index i ($r_i = PRF_k(i)$). Les aléas $r_i$ (c'est-à-dire les éléments sortant de la fonction PRF paramétrée par la première clé de régénération k et appliquée aux index i) doivent avoir une taille importante, par exemple 1100 bits. Le coupon $x_i$ d'authentification de l'étiquette est alors calculé selon la formule suivante: $x_i = HASH(r_iP)$. Autrement dit, le coupon $x_i$ est le résultat de la fonction de hachage HASH appliquée au produit scalaire entre l'aléa $r_i$ et le point P. Les coupons $x_i$ sont pré-calculés par l'entité de calcul et sont stockés sur l'étiquette T en vue d'être utilisés au cours d'authentifications auprès du lecteur R.

Dans la première phase d'authentification 21, dans une étape 21-1 de sélection, l'étiquette T choisit un index i de coupon d'authentification d'étiquette $x_i$ et envoie au lecteur R une donnée destinée à déterminer la valeur de l'index i utilisé par l'étiquette T, ainsi que le coupon $x_i$ d'authentification d'étiquette. Dans l'exemple particulier de réalisation décrit ici, la donnée envoyée est l'index i du coupon $x_i$. Dans une première variante, la donnée destinée à déterminer l'index i peut être une valeur de compteur déduite de i mais différente de i, par exemple le i-ième état d'un registre à décalage "LFSR" (pour "Linear Feedback Shift Register") initialisé avec une constante non nulle. Dans une deuxième variante, seul le coupon $x_i$ est transmis et permet au lecteur R d'accéder à l'index i du coupon, conformément à une règle de calcul de l'index connue par le lecteur.

Dans une étape 21-2 d'obtention d'un coupon d'authentification du lecteur et de génération d'un défi, le lecteur R récupère le coupon pré-calculé $t_i$ associé à l'index i reçu et génère un défi c. Par exemple, les coupons $t_i$ d'authentification du lecteur sont mémorisés dans une table à m entrées, dont la i-ième entrée comprend le coupon $t_i$ d'authentification du lecteur. En fin d'étape 21-2, le lecteur R envoie à l'étiquette T le défi c généré ainsi que le coupon $t_i$ d'authentification du lecteur.

Dans une étape 21-3 de vérification, l'étiquette T calcule une valeur d'authentification du lecteur R. A cette fin, elle applique la seconde fonction pseudo-aléatoire PRF' paramétrée par la seconde clé de régénération k' à l'index i choisi à l'étape 21-1. Autrement dit, elle calcule le résultat de $PRF'_{k'}(i)$. L'étiquette T compare la valeur calculée au coupon d'authentification du lecteur $t_i$ reçu. Si la valeur d'authentification correspond au coupon $t_i$ d'authentification du lecteur alors, cela signifie que le lecteur R est authentifié.

Dans une étape 22-1 de finalisation de l'authentification, propre à la phase d'authentification 22 de l'étiquette par le lecteur, et exécutée uniquement si la vérification effectuée à l'étape 21-3 est positive (branche Ok sur le figure 2), l'étiquette T régénère l'aléa $r_i$ et calcule une réponse y au défi reçu du lecteur R. L'étape 22-1 est comparable à l'étape 11-3 de régénération et de calcul selon la figure 1. En fin d'étape 22-1, l'étiquette T envoie au lecteur R la réponse y calculée.

Dans une étape de vérification 22-2, comparable à l'étape de vérification 11-4 selon la figure 1, il est vérifié que le coupon $x_i$ reçu de l'étiquette en fin d'étape 21-1 est égal à la valeur obtenue en appliquant la fonction de hachage HASH à la somme du produit scalaire de la réponse y et du point P avec le produit scalaire du défi c et de la clé publique V : *HASH(yP + cV)*. Si la vérification est positive (branche Ok sur la figure 2), alors l'étiquette T s'est correctement authentifiée auprès du lecteur R, après avoir authentifié le lecteur R.

On remarque que dans l'exemple de réalisation décrit ici, la phase d'authentification 21 du lecteur R par l'étiquette T n'augmente pas le nombre de messages échangés entre l'étiquette et le lecteur au cours de l'authentification de l'étiquette par le lecteur selon la figure 1. Ainsi, l'authentification mutuelle appliquée au protocole GPS en mode coupons reste un protocole en trois passes : l'envoi par l'étiquette du coupon $x_i$ d'authentification d'étiquette et de l'index i, l'envoi par le lecteur d'une réponse et d'un coupon $t_i$ d'authentification du lecteur, et l'envoi par l'étiquette, le cas échéant, de la réponse au défi.

On remarque que si l'authentification du lecteur R par l'étiquette T échoue, alors la réponse y n'est pas envoyée au lecteur R par l'étiquette T. Ainsi, le coupon $x_i$, bien qu'envoyé au lecteur R, n'est pas consommé, puisqu'aucune réponse y n'est envoyée ensuite par l'étiquette. Ainsi, le coupon $x_i$ peut être réutilisé au cours d'une authentification ultérieure. Ce système d'authentification est donc résistant à des attaques par déni de service contre les étiquettes par des lecteurs corrompus qui tenteraient de dialoguer avec des étiquettes afin de leur faire consommer leur coupons d'authentification d'étiquette.

Dans un exemple de réalisation de l'invention, les première et seconde clés k, k' de régénération sont identiques (k = k') et les première et seconde fonctions pseudo-aléatoires PRF et PRF' sont dérivées d'une même fonction pseudo-aléatoire maître $F_k$ produisant des mots binaires de longueur Lf supérieure ou égale à des longueurs Lt et Lx des coupons $t_i$ d'authentification du lecteur et des coupons $x_i$ d'authentification de l'étiquette. Par exemple, les fonctions PRF et PRF' sont telles que :

$$PRF_k(i) = F_k(2i+1)[1,...,Lt], \text{ et } PRF'_k(i) = F_k(2i)[1,...,Lx],$$

avec la convention que pour $L \leq Lf$ et j entier, on note $F_k(j)[1,...,L]$ le mot constitué des L premiers bits de $F_k(j)$.

Dans un autre exemple de réalisation, on suppose que la taille de ce qui est produit par la fonction maître $F_k$ est supérieure à la somme de ce qui est produit par les première et seconde fonctions pseudo-aléatoires PRF et PRF'. Ainsi, pour obtenir $PRF_k(i)$ et $PRF'_k(i)$, on extrait de $F_k(i)$ deux chaînes, une première qui correspond à $PRF_k(i)$ et une seconde qui correspond à $PRF'_k(i)$.

Dans un troisième exemple de réalisation, les première et seconde fonctions pseudo-aléatoires PRF et PRF' sont fondées sur le même algorithme et les paramètres respectifs k et k' de ces fonctions sont différents mais dérivés d'une même clé maître $\kappa$. Ainsi, les valeurs de k et de k' peuvent par exemple être obtenues à partir de $\kappa$ selon les formules suivantes :

$$k = \kappa \quad \text{et } k' = \kappa \oplus 1 \text{ (modification du bit de poids faible de } \kappa \text{)}.$$

Dans ces exemples de réalisation, on remarque que l'étiquette n'a pas besoin de plus d'espace mémoire, ni de plus de circuit qu'une étiquette qui implémente le protocole GPS selon l'art antérieur.

Dans une variante de réalisation de l'invention, les coupons d'authentification du lecteur $t_i$ sont calculés à la demande, ou "on-line", c'est-à-dire qu'un coupon $t_i$ est calculé par l'entité de calcul à partir de l'index i pour une authentification courante sur demande du lecteur, puis transmis au lecteur pour qu'il s'authentifie. Dans cette variante, les coupons d'authentification $t_i$ du lecteur ne sont pas pré-calculés puis stockés sur le lecteur R au cours de la phase de configuration 20. Dans cette variante, un coupon est requis par le lecteur R auprès de l'entité de calcul au cours de l'étape 21-3 d'obtention d'un coupon d'authentification du lecteur. Le coupon est envoyé au lecteur R par l'entité de calcul en réponse. Dans une deuxième variante, les coupons $t_i$ d'authentification du lecteur R sont récupérés dans une base de données distante à laquelle le lecteur R a accès.

Dans une autre variante non couverte par les revendications, dans l'étape 21-2 d'obtention d'un coupon d'authentification du lecteur et de génération d'un défi, le coupon $t_i$ d'authentification est considéré comme une partie du défi c que le lecteur R envoie à l'étiquette. Ainsi, seul le défi c est transmis dans l'étape 21-2, et il comprend le coupon ti. Par exemple, le coupon ti constitue les f bits de poids faibles du défi c qui comprend 1 bits. Pour obtenir le défi c, les (1-f) bits de poids fort du défi sont tirés au sort.

On remarque que dans les exemples de réalisation décrits ici, un même index i est utilisé pour désigner un coupon d'authentification $x_i$ de l'étiquette et un coupon d'authentification $t_i$ du lecteur utilisés au cours du procédé de l'invention. Bien sûr, deux index différents peuvent être associés à chacun de ces coupons. Ainsi, avec le procédé de l'invention, un coupon $x_i$ d'authentification de l'étiquette peut avoir un index i distinct de l'index j du coupon tj d'authentification du lecteur, demandé par l'étiquette. Par exemple, la valeur de j peut être obtenue par l'étiquette à partir d'une formule connue de l'étiquette, puis transmise au lecteur. Pour faciliter la lecture de la description et des figures, nous avons choisi d'utiliser le même index i pour les coupons $t_i$ d'authentification du lecteur et les coupons $x_i$ d'authentification d'étiquette.

Une étiquette radio T selon une forme particulière de réalisation de l'invention va maintenant être décrite en relation avec la figure 3. L'étiquette T est adaptée pour dialoguer avec un lecteur radio (non représenté sur la figure 3) au cours d'une séquence d'authentification conforme aux étapes du procédé décrites précédemment.

Dans l'exemple particulier décrit ici, l'étiquette T est un dispositif passif recevant son énergie du lecteur radio lors d'une interrogation par celui-ci. L'étiquette T comprend :

- une antenne 30 adaptée pour envoyer au lecteur et recevoir du lecteur,
- des moyens de stockage 31, tels qu'une mémoire, adaptés pour stocker la clé secrète s du couple de clés GPS (s, V), la première clé de régénération k, la première fonction pseudo-aléatoire PRF, la seconde clé de régénération k', la seconde fonction pseudo-aléatoire PRF' et les coupons d'authentification de l'étiquette $x_i$ lorsqu'ils sont pré-calculés. Dans une variante de réalisation de l'invention, les première et seconde fonctions PRF et PRF' utilisent les mêmes ressources de calcul,

- une puce de silicium 32 comprenant une pluralité de transistors adaptés pour constituer des portes logiques d'une logique câblée non programmable. La logique câblée définit :

  - des moyens 33 de sélection d'un indice, adaptés pour sélectionner un indice i de coupon d'identification d'un coupon d'authentification du lecteur $t_i$,
  - des moyens 34 qui, couplés à l'antenne 30, constituent des moyens d'envoi adaptés pour envoyer une donnée permettant de déterminer un index i d'identification d'un coupon d'authentification du lecteur $t_i$, ledit index étant choisi par l'étiquette par les moyens 33 de sélection. Les moyens d'envoi sont également adaptés pour envoyer au lecteur une réponse y au défi reçue du lecteur et calculée par des moyens d'authentification 38,
  - des moyens 35 qui, couplés à l'antenne 30, constituent des moyens de réception adaptés pour recevoir du lecteur le coupon $t_i$,
  - des moyens 36 d'obtention d'une valeur d'authentification, agencés pour calculer une valeur d'authentification à partir de l'index i choisi par l'étiquette
  - des moyens de vérification 37, agencés pour agencés pour vérifier que le coupon reçu $t_i$ du lecteur correspond à la valeur d'authentification obtenue par les moyens 35, et
  - des moyens d'authentification 38, agencés pour régénérer l'aléa $r_i$ et pour calculer une réponse y au défi reçu du lecteur R. Les moyens 38 ne sont mis en œuvre que si la vérification effectuée par les moyens de vérification 37 est positive.

Les moyens 33 et 34 sont adaptés pour mettre en œuvre l'étape 21-1.

Les moyens 36 et 37 sont adaptés pour mettre en œuvre l'étape 21-3 précédemment décrite.

Les moyens 38 sont adaptés pour mettre en œuvre l'étape 22-1.

Un lecteur radio R selon une forme particulière de réalisation de l'invention va maintenant être décrit en relation avec la figure 4.

Le lecteur radio R est un dispositif actif, émetteur de radio fréquences qui active une étiquette (non représentée sur la figure 4) qui passe à sa proximité en lui fournissant une énergie dont elle a besoin. Le lecteur R selon l'invention est adapté pour dialoguer avec l'étiquette au cours d'une séquence d'authentification conforme aux étapes du procédé selon l'invention décrites précédemment.

Le lecteur R comprend plusieurs modules :

- une unité de traitement 40, ou "CPU" (de l'anglais "Control Processing Unit"),
- un ensemble de mémoires, dont une mémoire volatile 41, ou "RAM" (pour "Random Access Memory") utilisée pour exécuter des instructions de code, stocker des variables, etc.,
- une antenne 42, adaptée pour émettre et recevoir par la voie radio,
- un module de réception 43, agencé pour recevoir de l'étiquette une donnée permettant de déterminer un index i d'identification d'un coupon d'authentification du lecteur $t_i$, choisi par l'étiquette,
- un module 44 d'obtention d'un coupon, agencé pour obtenir le coupon $(t_i)$ à partir de l'index déterminé,
- un module d'envoi 45, agencé pour envoyer le coupon $(t_i)$ à l'étiquette. Dans un exemple de réalisation de l'invention où le schéma GPS est mis en œuvre pour authentifier l'étiquette, le module d'envoi est adapté également pour envoyer à l'étiquette, avec le coupon $t_i$ le défi c. Dans une variante de cet exemple de réalisation, le module d'envoi 45 est adapté pour envoyer le coupon ti comme une partie du défi c,
- un module d'authentification 46, agencé pour authentifier l'étiquette.

Dans une variante de réalisation de l'invention, le lecteur R comprend des moyens de communication (non représentés) avec l'entité de calcul adaptés pour demander et recevoir un coupon pour une authentification courante.

Les modules communiquent via un bus de communication.

Les modules 43, 44 et 45 sont adaptés pour mettre en œuvre l'étape 21-2 précédemment décrite.

Le module 46 est adapté pour mettre en œuvre l'étape 22-2.

Il s'agit de préférence de modules logiciels comprenant des instructions logicielles pour faire exécuter les étapes du procédé d'authentification mutuelle.

L'invention concerne donc aussi :

- un programme d'ordinateur comportant des instructions pour la mise en œuvre du procédé d'authentification mutuelle d'une étiquette et d'un lecteur tel que décrit précédemment, lorsque ce programme est exécuté par un processeur ;
- un support d'enregistrement lisible par un lecteur sur lequel est enregistré le programme d'ordinateur décrit ci-dessus.

Les modules logiciels peuvent être stockés dans, ou transmis par un support de données. Celui-ci peut être un support matériel de stockage, par exemple un CD-ROM, une disquette magnétique ou un disque dur, ou bien un support de transmission tel qu'un signal, ou un réseau de télécommunication.

Dans une réalisation particulière de l'invention, non détaillée, l'étiquette 10 est un dispositif actif. L'étiquette T est alors équipée d'une batterie lui permettant d'émettre des signaux. Ainsi, l'étiquette T et le lecteur R peuvent interagir sur une distance plus importante que dans le cas où l'étiquette T est un dispositif passif qui reçoit son énergie du lecteur.

**Revendications**

1. Procédé d'authentification mutuelle d'un lecteur (R) et d'une étiquette radio (T), comprenant :

   - un protocole d'authentification de l'étiquette par le lecteur réalisé selon un schéma d'authentification GPS comprenant un pré-calcul d'un nombre prédéterminé (n) de coupons d'authentification de l'étiquette ($x_i$), et
   - une étape (21-1) d'envoi par l'étiquette au lecteur d'une donnée permettant de déterminer un index (i) d'identification d'un coupon d'authentification du lecteur ($t_i$), choisi par l'étiquette,
   - une étape (21-2) d'obtention par le lecteur du coupon ($t_i$) à partir de l'index déterminé et d'envoi dudit coupon ($t_i$) et d'un défi (c) du schéma GPS par le lecteur à l'étiquette,
   - une étape (21-3) d'obtention par l'étiquette d'une valeur d'authentification à partir de l'index choisi et de vérification par l'étiquette que le coupon reçu du lecteur correspond à la valeur d'authentification obtenue, la valeur d'authentification du lecteur ($t_i$) étant obtenue au moyen d'une première fonction pseudo-aléatoire (PRF') installée sur l'étiquette, paramétrée par une première clé secrète de régénération (k') et appliquée à l'index choisi,
   - si la vérification est positive, une étape d'envoi par l'étiquette au lecteur d'une réponse (y) calculée en réponse au défi (c) permettant la finalisation de l'authentification de l'étiquette par le lecteur, et
   - si la vérification est négative une interruption du procédé d'authentification mutuelle.

2. Procédé selon la revendication 1 comprenant, lors de l'étape d'obtention par le lecteur du coupon d'authentification du lecteur ($t_i$), une étape d'extraction d'une mémoire par le lecteur dudit coupon pré-calculé et associé dans la mémoire à l'index (i) déterminé.

3. Procédé selon la revendication 1, dans lequel la valeur d'authentification est calculée par l'étiquette au moment de l'authentification.

4. Procédé selon la revendication 3, dans lequel le coupon d'authentification de l'étiquette ($x_i$) est calculé au cours d'une phase (20) de configuration à partir d'un aléa ($r_i$) obtenu en appliquant à l'index une première fonction pseudo-aléatoire (PRF) paramétrée par une première clé secrète de régénération (k), ladite fonction pseudo-aléatoire (PRF) et ladite clé de régénération (k) étant installées dans l'étiquette.

5. Système d'authentification radio comprenant : au moins une étiquette radio, comprenant :

   - un module d'authentification auprès du lecteur réalisé selon un schéma d'authentification GPS comprenant un pré-calcul d'un nombre prédéterminé (n) de coupons d'authentification de l'étiquette ($x_i$),
   - des moyens (33) de sélection d'un index (i) d'identification d'un coupon d'authentification du lecteur ($t_i$),
   - des moyens d'envoi (30, 34), agencés pour envoyer une donnée permettant de déterminer l'index (i) d'identification d'un coupon d'authentification du lecteur ($t_i$), choisi par l'étiquette,

- des moyens de réception (30, 35), agencés pour recevoir du lecteur le coupon (t$_i$) et un défi (c) du schéma GPS,,
- des moyens (36) d'obtention d'une valeur d'authentification à partir de l'index choisi, la valeur d'authentification du lecteur (t$_i$) étant obtenue au moyen d'une fonction pseudo-aléatoire (PRF') installée sur l'étiquette, paramétrée par une clé secrète de régénération (k') et appliquée à l'index choisi,
- des moyens de vérification (37), agencés pour vérifier que le coupon reçu du lecteur correspond à la valeur d'authentification obtenue,
- des moyens d'envoi (38), agencés pour envoyer au lecteur une réponse (y) calculée en réponse au défi (c) permettant la finalisation de l'authentification de l'étiquette par le lecteur, lesdits moyens étant mis en œuvre uniquement lorsque la vérification effectuée par les moyens de vérification est positive, et un lecteur radio (R) adapté pour s'authentifier auprès de l'étiquette radio et pour authentifier l'étiquette, comprenant :
- un module d'authentification de l'étiquette réalisé selon un schéma d'authentification GPS comprenant un pré-calcul d'un nombre prédéterminé (n) de coupons d'authentification de l'étiquette (x$_i$),
- des moyens de réception (43), agencés pour recevoir de l'étiquette une donnée permettant de déterminer un index (i) d'identification d'un coupon d'authentification du lecteur (t$_i$), choisi par l'étiquette,
- des moyens d'obtention (44), agencés pour obtenir le coupon (t$_i$) à partir de l'index déterminé,
- des moyens d'envoi (45), agencés pour envoyés ledit coupon (t$_i$) et un défi (c) du schéma GPS à l'étiquette,
- des moyens d'authentification (46), agencés pour authentifier l'étiquette.

**Patentansprüche**

1. Verfahren zur gegenseitigen Authentifizierung eines Lesegeräts (R) und eines Funketiketts (T), das enthält:

- ein gemäß einem GPS-Authentifizierungsschema durchgeführtes Authentifizierungsprotokoll des Etiketts durch das Lesegerät, das eine Vorberechnung einer vorbestimmten Anzahl (n) von Authentifizierungscoupons des Etiketts (x$_i$) enthält, und
- einen Schritt (21-1) des Sendens eines Datenwerts vom Etikett an das Lesegerät, der es ermöglicht, einen Identifikationsindex (i) eines Authentifizierungscoupons des Lesegeräts (t$_i$) zu bestimmen, der vom Etikett ausgewählt wird,
- einen Schritt (21-2) des Erlangens des Coupons (t$_i$) durch das Lesegerät ausgehend vom bestimmten Index und des Sendens des Coupons (t$_i$) und einer Herausforderung (c) des GPS-Schemas durch das Lesegerät an das Etikett,
- einen Schritt (21-3) des Erlangens eines Authentifizierungswerts ausgehend vom ausgewählten Index durch das Etikett und der Überprüfung durch das Etikett, dass der vom Lesegerät empfangene Coupon dem erlangten Authentifizierungswert entspricht, wobei der Authentifizierungswert des Lesegeräts (t$_i$) mittels einer ersten pseudozufälligen Funktion (PRF') erlangt wird, die auf dem Etikett installiert ist, durch einen ersten Regenerations-Geheimschlüssel (k') parametriert und an den gewählten Index angewendet wird,
- wenn die Überprüfung positiv ist, einen Schritt des Sendens vom Etikett an das Lesegerät einer berechneten Antwort (y) als Antwort auf die Herausforderung (c), die den Abschluss der Authentifizierung des Etiketts durch das Lesegerät erlaubt, und
- wenn die Überprüfung negativ ist, eine Unterbrechung des Verfahrens gegenseitiger Authentifizierung.

2. Verfahren nach Anspruch 1, das im Schritt des Erlangens des Authentifizierungscoupons des Lesegeräts (t$_i$) durch das Lesegerät einen Schritt der Entnahme aus einem Speicher des vorberechneten und im Speicher dem bestimmten Index (i) zugeordneten Coupons durch das Lesegerät enthält.

3. Verfahren nach Anspruch 1, wobei der Authentifizierungswert vom Etikett zum Zeitpunkt der Authentifizierung berechnet wird.

4. Verfahren nach Anspruch 3, wobei der Authentifizierungscoupon des Etiketts (x$_i$) während einer Konfigurationsphase (20) ausgehend von einer Zufälligkeit (r$_i$) berechnet wird, die durch Anwenden einer durch einen ersten Regenerations-Geheimschlüssel (k) parametrierten ersten pseudozufälligen Funktion (PRF) an den Index erlangt wird, wobei die pseudozufällige Funktion (PRF) und der Regenerationsschlüssel (k) im Etikett installiert sind.

5. Funkauthentifizierungssystem, das enthält:

mindestens ein Funketikett, das enthält:

- ein Modul zur Authentifizierung beim Lesegerät, das gemäß einem GPS-Authentifizierungsschema durchgeführt wird, das eine Vorberechnung einer vorbestimmten Anzahl (n) von Authentifizierungscoupons des Etiketts ($x_i$) enthält,
- Einrichtungen (33) zur Auswahl eines Identifikationsindex (i) eines Authentifizierungscoupons des Lesegeräts ($t_i$),
- Sendeeinrichtungen (30, 34), die eingerichtet sind, um einen Datenwert zu senden, der es ermöglicht, den Identifikationsindex (i) eines Authentifizierungscoupons des Lesegeräts ($t_i$) zu bestimmen, der vom Etikett gewählt wird,
- Empfangseinrichtungen (30, 35), die eingerichtet sind, um den Coupon ($t_i$) und eine Herausforderung (c) des GPS-Schemas vom Lesegerät zu empfangen,
- Einrichtungen (36) zum Erlangen eines Authentifizierungswerts ausgehend vom gewählten Index, wobei der Authentifizierungswert des Lesegeräts ($t_i$) mittels einer pseudozufälligen Funktion (PRF') erlangt wird, die auf dem Etikett installiert ist, durch einen Regenerations-Geheimschlüssel (k') parametriert und an den gewählten Index angewendet wird,
- Überprüfungseinrichtungen (37), die eingerichtet sind, um zu überprüfen, dass der vom Lesegerät empfangene Coupon dem erlangten Authentifizierungswert entspricht,
- Sendeeinrichtungen (38), die eingerichtet sind, um an das Lesegerät eine berechnete Antwort (y) als Antwort auf die Herausforderung (c) zu senden, die den Abschluss der Authentifizierung des Etiketts durch das Lesegerät erlaubt, wobei die Einrichtungen nur angewendet werden, wenn die von den Überprüfungseinrichtungen ausgeführte Überprüfung positiv ist, und

ein Funklesegerät (R), das geeignet ist, sich beim Funketikett zu authentifizieren und das Etikett zu identifizieren, das enthält:

- ein gemäß einem GPS-Authentifizierungsschema hergestelltes Authentifizierungsmodul des Etiketts, das eine Vorberechnung einer vorbestimmten Anzahl (n) von Authentifizierungscoupons des Etiketts ($x_i$) enthält,
- Empfangseinrichtungen (43), die eingerichtet sind, um vom Etikett einen Datenwert zu empfangen, der es ermöglicht, einen Identifikationsindex (i) eines Authentifizierungscoupons des Lesegeräts ($t_i$) zu bestimmen, der vom Etikett gewählt wird,
- Erlangungseinrichtungen (44), die eingerichtet sind, um den Coupon ($t_i$) ausgehend vom bestimmten Index zu erlangen,
- Sendeeinrichtungen (45), die eingerichtet sind, um den Coupon ($t_i$) und eine Herausforderung (c) des GPS-Schemas an das Etikett zu senden,
- Authentifizierungseinrichtungen (46), die eingerichtet sind, um das Etikett zu authentifizieren.

## Claims

1. Method for mutual authentication of a reader (R) and a radio tag (T), comprising:

- a protocol for authentication of the tag by the reader, which is implemented according to a GPS authentication scheme comprising pre-calculation of a predetermined number (n) of authentication coupons ($x_i$) for the tag, and
- a step (21-1) of the tag sending, to the reader, a datum allowing determination of an index (i) for identifying an authentication coupon ($t_i$) for the reader, said index being chosen by the tag,
- a step (21-2) of the reader obtaining the coupon ($t_i$) on the basis of the determined index, and of the reader sending said coupon ($t_i$) and a GPS scheme challenge (c) to the tag,
- a step (21-3) of the tag obtaining an authentication value on the basis of the chosen index, and of the tag verifying that the coupon received from the reader corresponds to the obtained authentication value, the authentication value ($t_i$) for the reader being obtained by means of a first pseudo-random function (PRF'), which is installed on the tag, parameterized by a first secret regeneration key (k') and applied to the chosen index,
- if the verification is positive, a step of the tag sending, to the reader, a response (y), which is calculated in response to the challenge (c) and allows the authentication of the tag by the reader to be finalized, and
- if the verification is negative, an interruption of the mutual authentication method.

2. Method according to Claim 1, comprising, during the step of the reader obtaining the authentication coupon ($t_i$) for the reader, a step of the reader retrieving, from a memory, said coupon, which is pre-calculated and associated with the determined index (i) in the memory.

3. Method according to Claim 1, wherein the authentication value is calculated by the tag at the time of authentication.

4. Method according to Claim 3, wherein the authentication coupon $(x_i)$ for the tag is calculated during a configuration phase (20) on the basis of a random $(r_i)$ obtained by applying to the index a first pseudo-random function (PRF) parameterized by a first secret regeneration key (k), said pseudo-random function (PRF) and said regeneration key (k) being installed in the tag.

5. Radio authentication system comprising:

   at least one radio tag, comprising:

   - a module for authentication with the reader, which is produced according to a GPS authentication scheme comprising pre-calculation of a predetermined number (n) of authentication coupons $(x_i)$ for the tag,
   - means (33) for selecting an index (i) for identifying an authentication coupon $(t_i)$ for the reader,
   - sending means (30, 34), which are designed to send a datum allowing determination of the index (i) for identifying an authentication coupon $(t_i)$ for the reader, said index being chosen by the tag,
   - receiving means (30, 35), which are designed to receive, from the reader, the coupon $(t_i)$ and a GPS scheme challenge (c),
   - means (36) for obtaining an authentication value on the basis of the chosen index, the authentication value $(t_i)$ for the reader being obtained by means of a pseudo-random function (PRF'), which is installed on the tag, parameterized by a secret regeneration key (k') and applied to the chosen index,
   - verification means (37), which are designed to verify that the coupon received from the reader corresponds to the obtained authentication value,
   - sending means (38), which are designed to send, to the reader, a response (y), which is calculated in response to the challenge (c) and allows the authentication of the tag by the reader to be finalized, said means being employed only when the verification performed by the verification means is positive, and

   a radio reader (R), which is designed to authenticate itself with the radio tag and to authenticate the tag, comprising:

   - a module for authenticating the tag, which is produced according to a GPS authentication scheme comprising pre-calculation of a predetermined number (n) of authentication coupons $(x_i)$ for the tag,
   - receiving means (43), which are designed to receive, from the tag, a datum allowing determination of an index (i) for identifying an authentication coupon $(t_i)$ for the reader, said index being chosen by the tag,
   - obtaining means (44), which are designed to obtain the coupon $(t_i)$ on the basis of the determined index,
   - sending means (45), which are designed to send said coupon $(t_i)$ and a GPS scheme challenge (c) to the tag,
   - authentication means (46), which are designed to authenticate the tag.

T

R

**s (GPS secret)**
**k (PRF secret)**

**V = -sP (GPS pub)**

$r_i = PRFk(i)$

$x_i = HASH(r_iP)$

$mem(x_i)$

10-1

10

11-1

sel ( i )

$x_i$

11-2

sel ( c )

c

11-3

11

$r_i = PRF_k(i)$
$y = r_i + sc$

y

11-4

?
$x_i = HASH( yP + cV)$

Ok

Figure 1

T

R

**s (GPS secret)**
**k (PRF secret)**
**k' (PRF' secret)**

**V = -sP (GPS pub)**

20

20-2

$r_i = PRFk(i)$

$x_i = HASH(r_iP)$

$mem(x_i)$

$t_i = PRF'_{k'}(i)$

20-1

21-1

sel ( i )

$x_i, i$

21-2

21

ret( $t_i$ )
sel ( c )

c, $t_i$

21-3

?
$t_i = PRF'_{k'}(i)$

Ok

22-1

$r_i = PRF_k(i)$
$y = r_i + sc$

y

22-2

22

?
$x_i = HASH( yP + cV)$

Ok

Figure 2

Figure 3

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. GIRAULT ; G. POUPARD ; J. STEM.** On the Fly Authentication and Signature Schemes Based on Groups of Unknown Order. *Journal of Cryptology,* 2006, vol. 19 (4), 463-488

- **JULIEN BRINGER et al.** Identification and Privacy : Zero-Knowledge is not Enough. *International Association for Cryptologic Research,* 20 Mai 2008